# EUROPÄISCHE PATENTANMELDUNG

(11) **EP 0 734 998 A1**
(43) Veröffentlichungstag der Anmeldung: **02.10.1996**
(21) Anmeldenummer: 96102491.6
(22) Anmeldetag: 20.02.1996
(51) Int. Cl.: B67C 7/00, B65G 47/61

(54) **Förderer an Behälterbehandlungsmaschinen**

(30) Priorität: 28.03.1995 DE 29505245 U
(71) Anmelder: KHS Maschinen- und Anlagenbau Aktiengesellschaft, D-44143 Dortmund (DE)
(72) Erfinder: Bernhard, Herbert, D-55578 Wolfsheim (DE)

(57) **Zusammenfassung**

Bei Behälterbehandlungsmaschinen werden die Behälter, beispielsweise Flaschen, auf Förderern zu den Behandlungsköpfen transportiert. Sobald eine andere Flaschengröße durch die Anlage gefahren wird, können die Behandlungsmaschinen durch höhenmäßige Veränderung der Position ihrer Behandlungsköpfe auf das neue Längenmaß der Flaschen eingestellt werden.

Bei der Verarbeitung von Kunststoff-Flaschen ist man dazu übergegangen, diese nur an den Mündungskragen aufzunehmen. Kritisch wird die Behandlung solcher Flaschen, sobald sie in Rundläufermaschinen zum Zwecke der Befüllung oder Etikettierung behandelt werden sollen. Je nach Art einer solchen Maschine sind hier besondere Anpassungsprobleme zu lösen. Mit der Erfindung soll eine problemlose Behandlung von unterschiedlichen Flaschengrößen innerhalb einer solchen Flaschenbehandlungsanlage oder -maschine gestattet sein, so daß Umstellarbeiten, wie sie sonst bei einem Flaschensortenwechsel erforderlich sind, unterbleiben können.

Hierzu ist vorgesehen, daß die Ein- und/oder Auslaufebene (2) der Behandlungsmaschine bei unterschiedlichen Flaschengrößen (5,7) auf einer einheitlichen Mündungskragenhöhe eingestellt und die Ebene des zugeordneten Förderers (4,6) an den unterschiedlichen Flaschenbodenhöhen anpaßbar ist.

## Beschreibung

Die Neuerung bezieht sich auf einen Förderer für Behälterbehandlungsmaschinen, beispielsweise zum Zu- und Abfördern von Flaschen, die mindestens teilweise während des Transports an ihren Mündungen oder Mündungskragen gehalten oder geführt werden und von rotierenden Überführungssternen den Behandlungsmaschinen zugeführt und entnommen werden.

Bei derartigen Behandlungsmaschinen werden beispielsweise Mehrwegglasflaschen auf Förderern zu den einzelnen Behandlungsmaschinen transportiert. Vorwiegend sind diese Förderer als Plattenbandförderer ausgebildet und in einer bestimmten Höhe fixiert. Beim Einlauf werden die Flaschen zweckmäßig von einer Vorsortierschnecke auf den gewünschten teilungsgerechten Abstand gebracht und von Überführungssternen in die eigentliche Rotationsbahn der jeweiligen Behandlungsmaschine eingeführt. Der Auslauf aus diesen Maschinen verläuft entsprechend, wobei jedoch auf abstandsbildende Hilfsmittel verzichtet werden kann. Sobald eine andere Flaschengröße durch die Anlage gefahren wird, können die Behandlungsmaschinen durch höhenmäßige Veränderung der Position ihrer Behandlungsköpfe auf das neue Längenmaß der Flaschen eingestellt werden, wobei die Förderer nach wie vor in ihrer ursprünglichen Einlaufhöhe verharren. Bei der Verarbeitung von Kunststoff-Flaschen ist man dazu übergegangen, diese in Teilbereichen einer solchen Behandlungsanlage nur an dem Gefäß bzw. Mündungskragen aufzunehmen und zu führen. Hierzu setzt man Luftförderer ein, die auf weite Strecken den Transport dieser Flaschen übernehmen können. Hierbei spielt im allgemeinen die höhenmäßige Veränderung keine Rolle, da unterschiedliche Flaschen vorwiegend mit gleichen Mündungsgestaltungen ausgelegt sind und aus diesem Grunde ohne weiteres auf eine Förderanlage verarbeitet werden können. Kritisch wird die Behandlung solcher Flaschen, sobald sie in Rundläufermaschinen beispielsweise zum Zwecke der Befüllung oder Etikettierung weiterbehandelt werden sollen. Je nach Art einer solchen Maschine sind hier besondere Anpassungsprobleme zu lösen.

Der Neuerung liegt die Aufgabe zugrunde, hier eine vorteilhafte Lösung vorzuschlagen, die eine problemlose Behandlung von unterschiedlichen Flaschengrößen innerhalb einer solchen Flaschenbehandlungsanlage oder -maschine gestattet, so daß umfangreiche Umstellarbeiten, wie sie sonst bei einem Flaschensortenwechsel erforderlich sind, unterbleiben können.

Gelöst wird diese Aufgabe bei einem Förderer an Behandlungsmaschinen gemäß dem Oberbegriff dadurch, daß die Ein- und/oder Auslaufebene der Behandlungsmaschine bei unterschiedlichen Flaschengrößen auf einer einheitlichen Mündungskragenhöhe eingestellt und die Ebene der zugeordneten Förderer den unterschiedlichen Flaschenbodenhöhen anpaßbar ist.

Dabei hat es sich in selbständiger Ausbildung als zweckmäßig erwiesen, daß unterhalb der Überführungssterne ein die Flaschen transportierender Förderer mit seiner Förderebene höhenmäßig auf unterschiedliche Flaschengrößen einstellbar gelagert ist.

Weitere Merkmale ergehen aus den Unteransprüchen.

Mit einer solchen Ausgestaltung ist es möglich, unterschiedliche Flaschengrößen problemlos an ihrem Mündungskragen zu erfassen und auf gleicher Höhe durch die Maschine zu transportieren und anschließend wieder aus dieser zu entlassen und auf normalen Förderern abzutransportieren, wobei die jeweilige Höhendifferenz dieser unterschiedlichen Flaschen durch entsprechende Anpassung des Zu- oder Abförderers problemlos ausgeglichen werden kann.

In nachfolgenden wird die Neuerung anhand eines Ausführungsbeispiels näher erläutert.

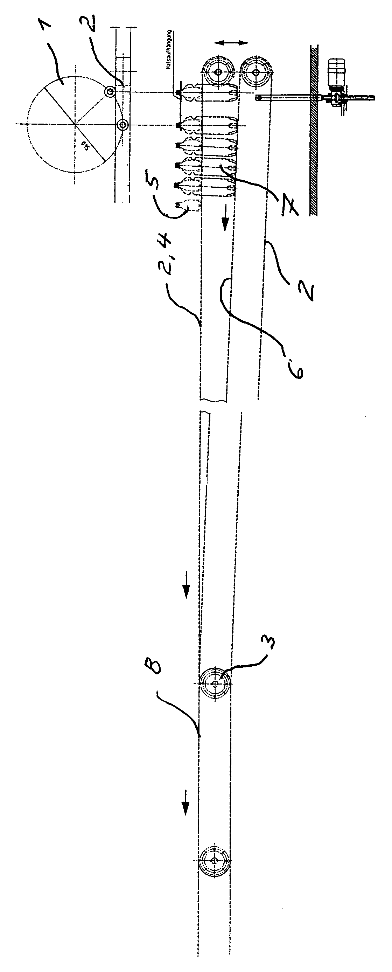

In der Zeichnung des Ausführungsbeispiels ist die Auslaufseite einer nicht näher dargestellten Behälterbehandlungsmaschine dargestellt. Die Flaschen werden zweckmäßig während der Behandlung auf einer einheitlichen Höhe mit ihren Mündungen durch die Maschine transportiert und den einzelnen Behandlungsköpfen zugeordnet. Beispielsweise im Bereich des Auslaufs einer solchen Behandlungsmaschine ist ein Überführungsstern 1 vorgesehen, der entweder tangential oder überdeckend mit einem darunter befindlichen Abförderer 2 korrespondiert. Der Abförderer 2 ist zweckmäßig als Plattenbandförderer ausgebildet und beispielsweise um einem Drehpunkt 3, der entfernt von dem Überführungsstern 1 angeordnet ist, heb- und senkbar ausgebildet. Die jeweilige höhenmäßige Zuführung des Anfangsbereichs des Förderers 2 kann durch bestimmte Sensoren auf die unterschiedliche Höhe der jeweils verarbeitenden Flaschen angepaßt sein. Zweckmäßig ist eine erste Förderebene 4 für kleine Flaschen 5 einstellbar, die etwa horizontal verläuft. Die zweite oder auch eine weitere einstellbare Ebene 6 für größere Flaschen 7 bildet dabei in Richtung auf den ortsfesten Förderer 8 eine ansteigende Ebene, so daß die von dem Überführungsstern 1 abgegebenen Flaschen 7 problemlos im ansteigenden Bereich aufgenommen und abtransportiert werden können.

## Patentansprüche

1. Förderer an Behälterbehandlungsmaschinen, beispielsweise zum Zu- und Abfördern von Flaschen, die mindestens teilweise während des Transports und ihrer Behandlung an ihren Mündungen oder Mündungskragen gehalten oder geführt werden und von rotierenden Überführungssternen den Behandlungsmaschinen zugeführt und entnommen werden, **dadurch gekennzeichnet,** daß die Ein- und/oder Auslaufebene der Behandlungsmaschine bei unterschiedlichen Flaschengrößen auf einer einheitlichen Mündungskragenhöhe eingestellt und die Ebene des zugeordneten Förderers (4, 5) den unterschiedlichen Flaschenbodenhöhen (5, 7) anpaßbar ist.

2. Förderer gemäß Oberbegriff Anspruch 1, **dadurch gekennzeichnet,** daß unterhalb der Überführungssterne (1) ein die Flaschen transportierender Förderer (2) mit seiner Förderebene (4, 6) höhenmäßig auf unterschiedliche Flaschengrößen (5, 7) einstellbar gelagert ist.

3. Förderer nach Anspruch 1 und 2, **dadurch gekennzeichnet,** daß mindestens ein Endbereich des Förderers (2) mit seiner Förderebene um einen von dem Überführungsstern (1) wegweisenden Drehpunkt (3) höhenmäßig veränderbar gelagert ist.

4. Förderer nach den Ansprüchen 1 bis 3, **dadurch gekennzeichnet,** daß die erste Förderebene (4) für kleine Flaschen (5) eine horizontale und die zweite und/oder weitere Ebene (6) für größere Flaschen (7) eine in Richtung auf den ortsfesten Förderer (8) ansteigende Ebene bildet.

5. Förderer nach den vorhergehenden Ansprüchen 1 bis 4, **dadurch gekennzeichnet,** daß die höhenmäßige Veränderung der Förderebene (4, 6) motorisch einstellbar ist.
